(19) Europäisches Patentamt
European Patent Office
Office européen des brevets

(11) Publication number: **0 032 701**
**B1**

(12) **EUROPEAN PATENT SPECIFICATION**

(45) Date of publication of patent specification: **14.03.84**

(51) Int. Cl.³: **C 08 F 212/10,**
C 08 F 4/04, C 08 F 2/02

(21) Application number: **81100157.7**

(22) Date of filing: **12.01.81**

(54) **Copolymerization of styrene-acrylonitrile with cyano-azoalkane initiators.**

(30) Priority: **16.01.80 US 112574**

(43) Date of publication of application:
**29.07.81 Bulletin 81/30**

(45) Publication of the grant of the patent:
**14.03.84 Bulletin 84/11**

(84) Designated Contracting States:
**BE DE FR GB IT NL**

(56) References cited:
**US - A - 3 931 143**

(73) Proprietor: **THE DOW CHEMICAL COMPANY**
**Dow Center 2030 Abbott Road Post Office Box 1967**
**Midland Michigan 48640 (US)**

(72) Inventor: **Kent, Raymond William, Jr.**
**2802 Valorie**
**Midland Michigan (US)**

(74) Representative: **Hann, Michael, Dr. et al,**
**Marburger Strasse 38**
**D-6300 Giessen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 032 701 B1

Courier Press, Leamington Spa, England.

# Copolymerization of styrene-acrylonitrile with cyano-azoalkane initiators

Styrene and acrylonitrile polymers have found wide acceptance and are used for many applications where it is desired to have a generally colorless polymer. However, styrene and acrylonitrile polymers have a natural tendency to develop a yellowish cast as conventionally manufactured, for example, by the recirculating coil process of Hanson U.S. Patent Nos. 2,769,804 and 2,989,517.

While a slight yellowish cast in the unfilled and unpigmented polymer is of little or no significance for some applications, for others it is desirable that the styrene and acrylonitrile polymer be generally colorless.

Many approaches have been made to reduce the color level of styrene-acrylonitrile polymers particularly through the use of various azo catalysts as described for example in Japanese Patent Applications No. 48-07,989, 48-031,285, 49-026,076, or Takizawa et al. U.S. Patent 3,931,128, Ott et al. U.S. Patent 3,629,370, MacLeay et al. U.S. Patents 4,099,157, 3,931,143, and 4,048,423. Control of the oxygen level in the polymerization zone is also important particularly in a recirculating coil process. Yet still further improvements are desired to meet stringent product color requirements.

Such further improvements are achieved in a process for the mass polymerization of a feedstream comprising a monomer composition of 20 to 80 parts by weight of acrylonitrile, 80 to 20 parts by weight of styrene, and 0 to 30 parts by weight of a diluent which is a solvent for the styrene and acrylonitrile monomers and a diluent for the resulting polymer by passing the feedstream into a polymerization zone where it is maintained at a temperature of from 120°C to 170°C under a pressure of 1.7 to 21.6 bar (10 to 300 pounds per square inch gauge=psig) and polymerized to form a polymer which is thereafter heated under vacuum sufficient to remove a major portion of any residual monomer diluent, the improvement characterized by incorporating in the feedstream, 80 to 700 parts per million parts (ppm) by weight of the feedstream of an unsymmetrical tertiary-aliphatic-alpha-cyano-azo-alkane as an initiator and maintaining a level of oxygen within the feedstream as it is passed into the polymerization zone of not greater than 20 ppm by weight of the feedstream, and a residence time in the polymerization zone of 0.7 to 1.5 hours.

The styrene component is preferably of commercial purity and is present in an amount of from 80 to 20 parts by weight based on total monomer. Optionally a conventional reinforcing rubber mass is dissolved in the styrene to produce so-called ABS or acrylonitrile-butadiene-styrene resin.

The acrylonitrile is preferably of commercial purity and is present in an amount of from 20 to 80 parts by weight.

The diluent is advantageously a solvent in which the styrene and acrylonitrile monomers are soluble. More advantageously, the diluent is the 0 to 30 parts by weight of ethylbenzene or N,N-dimethylformamide based on total weight of the feedstream. Beneficially, 15 to 25 parts by weight diluent is used with ethylbenzene particularly preferred.

The free radical polymerization initiator is advantageously 80 to 700 ppm by weight of the feedstream of an unsymmetrical tertiary-aliphatic-alpha-cyano-azoalkane of the formula:

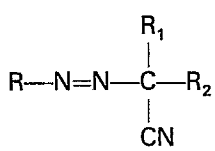

wherein R is tertiary-butyl or tertiary-amyl, $R_1$ is methyl and $R_2$ is $C_1$—$C_6$ alkyl or alkoxy, or $R_1$ and $R_2$ together form a pentenylene moiety. Beneficially, the free radical polymerization initiator is 80 to 700 ppm, and preferably 200 to 500 ppm, by weight of the feedstream of: 1-t-butylazo-1-cyanocyclohexane, 1-t-amylazo-1-cyanocyclohexane, 1-t-butylazo-1-cyano-3,3,5-trimethylcyclohexane, 1-t-amylazo-1-cyano-3,3,5-trimethylcyclohexane, 2-t-butylazo-2-cyanobutane or 2-t-butylazo-2-cyanopropane. Most preferably, the initiator is 200 to 500 parts per million parts by weight of the feedstream of 1-tertiary-butylazo-1-cyanocyclohexane. These initiators may be prepared by the process of in accordance with MacLeay et al. U.S. Patent 3,931,143.

The feedstream consists preferably of 80 to 20 parts by weight of styrene, 20 to 80 parts by weight of acrylonitrile and 0 to 30 parts by weight of a diluent such as ethylbenzene. It is essential and critical to the practice of the present invention and obtaining polymers having improved color that the oxygen level in the feedstream not be greater than 20 ppm by weight of the feedstream. Most preferably, the total molecular oxygen concentration should be maintained below 5 parts per million parts.

While one may either deoxygenate the components of the feedstream prior to mixing or deoxygenate the feedstream after mixing the components, the preferred practice is to deoxygenate the styrene and acrylonitrile monomers before mixing. Various methods may be employed. One is spraying the feedstream containing a solvent or diluent into a vacuum chamber repeatedly until the desired level

of oxygen below 20 parts per million parts has been obtained. Another is to sparge the individual feedstream components or a combined feedstream with nitrogen until the desired oxygen level has been obtained. Alternately, the feed may be first sparged with nitrogen and recycled through a vacuum chamber.

In the preparation of a styrene and acrylonitrile containing polymer such as a polymer of about 75 parts by weight styrene and 25 parts by weight acrylonitrile, employing a simple recirculating coil such as described in U.S. Patent No. 2,769,804, wherein the effluent from the coil is heated and passed through a falling stream devolatilizer, it was observed that the partial polymer sampled before entering the devolatilizer showed much less of a yellow cast than the polymer which had passed through the devolatilizer when about 45 ppm by weight of oxygen were present in the monomer feed to the polymerizing mass.

In practice using a recirculating coil or tube train apparatus or a boiling reactor, the polymerization initiator is added to the feedstream after mixing and deoxygenation and prior to being passed into a polymerization zone. Advantageously, the feedstream is subjected to temperatures of 120°C to 170°C and to pressures of 1.7 to 21.6 bar (10 to 300 psig) atm. Preferably, the feedstream is subjected to temperatures of 135°C to 155°C and pressures of from 7.8 to 14.7 bar (100 to 200 psig) for the recirculating coil apparatus and the recirculating tube train apparatus or from 1.7 to 5.1 bar (10 to 60 psig) atm for the boiling reactor. At temperatures in excess of 170°C, cooling of the reactor becomes very difficult. At temperatures below 120°C, the polymerization rate is too low for practical application.

In addition, when using a recirculating apparatus, pressures must be maintained above the vapor pressure of the lowest boiling component to prevent vapor phase polymerization. Pressures in excess of 21.6 bar (300 psig) may cause undesirable structural changes in the polymer. With a boiling reactor, the rate of reaction is difficult to control at pressures in excess of 5.1 bar (60 psig). While at pressures of less than 1.7 bar (10 psig), the process would be impractical because of excessively high molecular weight polymers or amounts of catalysts and chain-transfer agents required.

The rate of feed determines the residence time in the polymerization zone which in turn determines the portion of the feedstream polymerized. The residence time is preferably from 0.7 to 1.5 hours, and most preferably, 0.9 to 1.2 hours. With a residence time less than 0.7 hour, the heat of reaction under the preferred range of operating conditions would be too great and require too much diluent to control while if a residence time in excess of 1.5 hours is used the color is detrimentally affected.

The following examples illustrate the improvements which result from the process of this invention.

Example 1

Continuous process

Several continuous polymerizations were conducted utilizing a recirculating coil reactor with a feed comprised of 24 weight percent ethylbenzene, and 76 weight percent of a 75/25 weight percent mixture of styrene/acrylonitrile plus 500 ppm of initiator based on weight of polymerizable monomers. The feed was added to the reactor at a rate of 1 reactor volume per hour and the material within the coil was recirculated at 100 reactor volumes per hour. A monomer to polymer conversion of 60 weight percent was obtained. The recycle effluent was 55 weight percent solvent. Either 1-tertiary-butylazo-1-cyanocyclohexane or 1,1-bis(di-tert-butylperoxy)-cyclohexane was used as a polymerization initiator.

The oxygen content of the feed was measured polarographically using a standard dropping mercury electrode as set forth in the *Encyclopedia of Industrial Analysis,* Vol. 18, John Wiley & Sons, N.Y. 1974, p. 305—6. Without further treatment, the initial monomer feed contained 12—13 parts per million parts oxygen. In some runs this was reduced to less than 5 parts per million parts by bubbling nitrogen through the monomer feed tank.

The polymerizing mixture in the reactor was maintained at a temperature of 145°C and a pressure of 14.7 bar (200 psig). The effluent from the reactor was devolatilized at a temperature of about 235°C under a pressure of 2664 Pa (vacuum of 20 millimeters Hg) to isolate the polymer and reclaim the unreacted monomer and ethylbenzene. The devolatilized solid polymer was then extruded, cut into granules, and the color was measured by determining the absorbence of polymer solution of 10 grams of polymer in 50 milliliters of methylene chloride at a wavelength of 420 nanometers against a standard of methylene chloride. The absorbence data is set forth in Table I below, a lower absorbence equating to lower color.

TABLE I

| Initiator | Absorbence $O_2$ Present | Absorbence $N_2$ Purged |
|---|---|---|
| 1-tert-butylazo-1-cyanocyclohexane | 0.083 | 0.056 |
| 1,1-bis(di-tert-butylperoxy)-cyclohexane* | 0.125 | 0.088 |

*For comparison

Example 2

Batch process

Using the same 75/25 mixture of styrene/acrylonitrile in ethylbenzene, a number of t-alkyl cyanoazo initiators were evaluated by heating with the monomer solution in sealed glass ampules under conditions chosen to give 50—60 percent conversion. Typical results are given in Table II.

TABLE II

| Run | Initiator | Amount | Conditions | % Conv. | Absorbence |
|---|---|---|---|---|---|
| 2-1* | None | — | 140°C/2 hrs | 60% | 0.50 |
| 2-2** | 1,1-bis(di-t-butylperoxy)cyclohexane | 350 ppm*** | 120°C/1.5 hrs | 59% | 0.090 |
| 2-3 | 1-t-butylazo-1-cyano-cyclohexane | 500 ppm | 120°C/1.5 hrs | 59% | 0.051 |
| 2-4 | 1-t-amylazo-1-cyano-cyclohexane | 530 ppm | 120°C/1.5 hrs | 58% | 0.048 |
| 2-5 | 2-t-butylazo-2-cyanobutane | 430 ppm | 120°C/1.5 hrs | 51% | 0.056 |
| 2-6 | 2-t-butylazo-2-cyanopropane | 400 ppm | 120°C/1.5 hrs | 50% | 0.055 |

*Control.

**For comparison.

***parts by weight of initiator per million parts by weight of monomer solution.

## Claims

1. In a process for the mass polymerization of a feedstream comprising a monomer composition of 20 to 80 parts by weight of acrylonitrile, 80 to 20 parts by weight of styrene, and 0 to 30 parts by weight of a diluent by passing the feedstream into a polymerization zone where it is maintained at a temperature of 120°C to 170°C under a pressure of 1.7 to 21.6 bar (10 to 300 psig) and polymerized to form a polymer, which is thereafter heated under reduced pressure to remove a major portion of any residual monomer and diluent, the improvement characterized by incorporating within the feedstream 80 to 700 ppm (parts per million parts) by weight of feedstream of an unsymmetrical tertiary-aliphatic-alpha-cyano-azoalkane as an initiator, maintaining a level of oxygen in the feedstream as it is passed into the polymerization zone not greater than 20 ppm by weight of the feedstream and providing a residence time in the polymerization zone of 0.7 to 1.4 hours.

2. The process of Claim 1, wherein the cyanoazoalkane has the formula

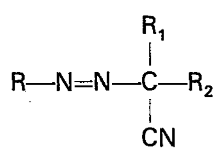

wherein R is tertiary-butyl or tertiary-amyl, $R_1$ is methyl and $R_2$ is $C_1$—$C_6$ alkyl or alkoxy or $R_1$ and $R_2$ together form a pentenylene moiety.

3. The process of Claim 1, wherein the cyanoazoalkane is 1-tertiary-butylazo-1-cyanocyclohexane.

4. The process of Claim 1, wherein the cyanoazolakane is 1-tertiary-amylazo-1-cyanocyclohexane.

5. The process of Claim 1, wherein the cyanoazoalkane is 2-tertiary-butylazo-2-cyanobutane.

6. The process of Claim 1, wherein the cyanoazoalkane is 2-tertiary-butylazo-2-cyanopropane.

7. The process of Claims 1—6, wherein the diluent is ethylbenzene.

8. The process of claims 1—7, wherein the level of oxygen within the feedstream to the polymerization zone is not greater than 5 ppm by weight of the feedstream.

9. The process of Claim 1, wherein a feedstream comprising a monomer composition of 20 to 80 parts by weight of acrylonitrile and 80 to 20 parts by weight of styrene diluted with 15 to 25 parts by weight of ethylbenzene is passed into a polymerization zone maintained at a temperature of 135°C to 155°C under a pressure of 7.8 to 14.7 bar (100 to 200 psig) to form a polymer, which is thereafter heated under reduced pressure to remove a major portion of any residual monomer and diluent, the improvement characterized by incorporating in the feedstream 200 to 500 ppm by weight of the feedstream of 1-tertiary-butylazo-1-cyanocyclohexane as a polymerization initiator, maintaining a level of oxygen in the feedstream as it is passed into the polymerization zone, of not greater than 5 ppm by weight of the feedstream, and providing a residence time in the polymerization zone of 0.9 to 1.2 hours.

**Patentansprüche**

1. Verbessertes Verfahren zur Massenpolymerisation eines Zufuhrstroms enthaltend eine Monomerzusammensetzung von 20 bis 80 Gewichtsteilen Acrylnitril, 80 bis 20 Gewichtsteilen Styrol und 0 bis 30 Gewichtsteilen eines Verdünnungsmittels durch Hindruchführen des Zufuhrstroms durch eine Polymerisationszone, wo er bei einer Temperatur von 120°C bis 170°C unter einem Druck von 1,7 bis 21,6 bar (10 bis 300 psig) gehalten und unter Bildung eines Polymeren, das danach unter vermindertem Druck zur Entfernung des Hauptanteils von etwa vorhandenen restlichen Monomeren und Verdünnungsmittel erwärmt wird, polymerisiert wird, dadurch gekennzeichnet, daß dem Zufuhrstrom 80 bis 700 Gewichts-ppm (Gewichtsteile pro Million Gewichtsteile) eines Stroms eines unsymmetrischen tertiären aliphatischen alpha-Cyanoazoalkans als Initiator zugesetzt werden, in dem Zufuhrstrom beim Durchgang durch die Polymerisationszone ein Sauerstoffniveau von nicht größer als 20 Gewichts-ppm aufrecht erhalten wird und eine Verweilzeit von 0,7 bis 1,4 Stunden in der Polymerisationszone eingehalten wird.

2. Verfahren nach Anspruch 1, dadurch gekennzeichnet, daß das Cyanazoalkan die Formel

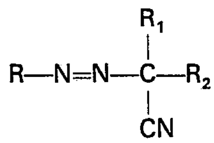

hat, in der R tertiär-Butyl oder tertiär-Amyl ist, $R_1$ Methyl ist und $R_2$ ein $C_1$—$C_6$-Alkyl oder Alkoxy ist oder $R_1$ und $R_2$ zusammen einen Pentenylenrest bilden.

3. Verfahren nach Anspruch 1, dadurch gekennzeichnet, daß das Cyanazoalkan 1-tertiär-Butylazo-1-cyanocyclohexan ist.

4. Verfahren nach Anspruch 1, dadurch gekennzeichnet, daß das Cyanazoalkan 1-tertiär-Amylazo-1-cyancyclohexan ist.

5. Verfahren nach Anspruch 1, dadurch gekennzeichnet, daß das Cyanazoalkan 2-tertiär-Butylazo-2-cyanobutan ist.

6. Verfahren nach Anspruch 1, dadurch gekennzeichnet, daß das Cyanazoalkan 2-tertiär-Butylazo-2-cyanpropan ist.

7. Verfahren nach den Ansprüchen 1 bis 6, dadurch gekennzeichnet, daß das Verdünnungsmittel Ethylbenzol ist.

8. Verfahren nach den Ansprüchen 1 bis 7, dadurch gekennzeichnet, daß das Sauerstoffniveau in dem Zufuhrstrom zu der Polymerisationszone nicht größer als 5 Gewichts-ppm des Zufuhrstroms ist.

9. Verbessertes Verfahren nach Anspruch 1, dadurch gekennzeichnet, daß ein Zufuhrstrom enthaltend eine Monomerzusammensetzung von 20 bis 80 Gewichtsteilen Acrylnitril und 80 bis 20 Gewichtsteilen Styrol, verdünnt mit 15 bis 25 Gewichtsteilen Ethylbenzol, in eine Polymerisationszone, die bei einer Temperatur von 135°C bis 155°C unter einem Druck von 7,8 bis 14,7 bar (100 bis 200 psig) zur Bildung eines Polymeren, das danach unter vermindertem Druck zur Entfernung eines Hauptanteils von etwa vorhandenem restlichen Monomeren und Verdünnungsmittel erwärmt wird, geführt wird, dadurch gekennzeichnet, daß dem Zufuhrstrom 200 bis 500 Gewichts-ppm eines Stroms von 1-tertiär-Butylazo-1-cyanocyclohexan als Polymerisationsinitiator zugesetzt werden, in dem Zufuhrstrom ein Sauerstoffniveau von nicht größer als 5 Gewichts-ppm aufrecht erhalten wird und eine Verweilzeit von 0,9 bis 1,2 Stunden in der Polymerisationszone eingehalten wird.

**Revendications**

1. Dans un procédé pour la polymérisation en masse d'un flux d'alimentation comprenant une composition monomère de 20 à 80 parties en poids d'acrylonitrile, de 80 à 20 parties en poids de styrène et de 0 à 30 parties en poids d'un diluant, par passage du flux d'alimentation dans une zone de polymérisation où il est maintenu à une température de 120°C à 170°C sous une pression de 1,7 à 21,6 bars (10 à 300 psig) et polymérisé pour former un polymère qui est ensuite chauffé sous pression réduite pour éliminer la majeure partie de tout monomère et diluant résiduels, le perfectionnement est caractérisé par l'incorporation au flux d'alimentation de 80 à 700 ppm (parties par million de parties) en poids du flux d'alimentation d'un tertio-aliphatique-alpha-cyano-azoalcane, asymétrique, comme initiateur, par le maintien d'une quantité d'oxygène dans le flux d'alimentation à mesure qu'il passe dans la zone de polymérisation ne dépassant pas 20 ppm en poids du flux d'alimentation et par la fourniture d'une durée de séjour dans la zone de polymérisation de 0,7 à 1,4 heure.

2. Procédé selon la revendication 1, dans lequel le cyano-azoalcane a la formule:

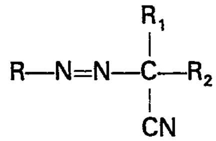

dans laquelle R est un groupe tertio-butyle ou tertio-amyle; $R_1$ est un groupe méthyle, et $R_2$ est un groupe alkyle en $C_1$—$C_6$ ou alcoxy, ou bien $R_1$ et $R_2$ forment ensemble un motif penténylène.

3. Procédé selon la revendication 1, dans lequel le cyano-azoalcane est le 1-tertio-butylazo-1-cyanocyclohexane.

4. Procédé selon la revendication 1, dans lequel le cyano-azoalcane est le 1-tertio-amylazo-1-cyanocyclohexane.

5. Procédé selon la revendication 1, dans lequel le cyano-azoalcane est le 2-tertio-butylazo-2-cyanobutane.

6. Procédé selon la revendication 1, dans lequel le cyano-azoalcane est le 2-tertio-butylazo-2-cyanopropane.

7. Procédé selon les revendications 1 à 6, dans lequel le diluant est l'éthylbenzène.

8. Procédé selon les revendications 1 à 7, dans lequel la quantité d'oxygène dans le flux d'alimentation passant dans la zone de polymérisation ne dépasse pas 5 ppm en poids du flux d'alimentation.

9. Procédé selon la revendication 1, dans lequel un flux d'alimentation, comprenant une composition monomère de 20 à 80 parties en poids d'acrylonitrile et de 80 à 20 parties en poids de styrène, diluées avec 15 à 25 parties en poids d'éthylbenzène, passe dans une zone de polymérisation maintenue à une température de 135°C à 155°C sous une pression de 7,8 à 14,7 bars (100 à 200 psig) pour former un polymère qui est ensuite chauffé sous pression réduite pour éliminer la majeure partie de tout monomère et diluant résiduels, le perfectionnement étant caractérisé par l'incorporation au flux d'alimentation de 200 à 500 ppm en poids du flux d'alimentation de 1-tertio-butylazo-1-cyanocyclohexane comme initiateur de polymérisation, par le maintien d'une quantité d'oxygène dans le flux d'alimentation à mesure qu'il passe dans la zone de polymérisation, ne dépassant pas 5 ppm en poids du flux d'alimentation, et par la fourniture d'une durée de séjour dans la zone de polymérisation de 0,9 à 1,2 heure.